# EUROPEAN PATENT APPLICATION

(11) **EP 4 080 629 A1**
(43) Date of publication of application: **26.10.2022**
(21) Application number: 20904173.0
(22) Date of filing: 08.12.2020
(51) Int. Cl.: H01M 8/04089, H01M 8/0662, H01M 8/04082, H01M 4/92, H01M 8/22, B63G 8/08

(54) **UNDERWATER RECIRCULATION-TYPE FUEL CELL SYSTEM**

(30) Priority: 20.12.2019 KR 20190172237
(71) Applicant: Bumhan Fuel Cell Co., Ltd., Gyeongsangnam-do 51343 (KR)
(72) Inventor: SHIN, Hyun Khil, Changwon-si, Gyeongsangnam-do 51343 (KR)
(74) Representative: Dehns
(86) International application number: PCT/KR2020/017880
(87) International publication number: WO 2021/125669

(57) **Abstract**

The present invention relates to a fuel cell system to be used in an underwater environment such as that of a submarine, wherein the fuel cell system can exhibit fuel utilization of 99.9% or more by the recirculation of a fuel even if simply composed of a single-stage stack, and can minimize complex gas-liquid separation control according to a multi-stage stack. In addition, the fuel cell system does not use pure oxygen underwater so as to corrode less, thereby enabling a catalyst with a low platinum loading rate or a thin electrolyte membrane to be used, and thus manufacturing costs can be reduced.

## Description

### Technical Field

The present invention relates to an underwater recirculation-type fuel cell system. More specifically, the present invention relates to a fuel cell system that is used for supplying electric power in a submarine and the like and has an increased effectiveness by recirculation of a fuel.

### Background Art

A fuel cell is a cell that converts chemical reaction energy of a fuel and an oxidizing agent into electrical energy. Typically, hydrogen is used as a fuel, and oxygen is used as an oxidizing agent. Such a fuel cell is attracting particular attention by virtue of its advantages such as high efficiency, no emission of pollutants such as NOₓ and SOₓ, and abundant fuel to be used.

The most basic stack unit that generates electricity in a fuel cell is a membrane-electrode assembly (MEA), which may be composed of an electrolyte membrane and an anode and a cathode formed on both sides of the electrolyte membrane. First, a fuel is subjected to an oxidation reaction at the anode to produce hydrogen ions and electrons, the hydrogen ions are transferred to the cathode, and oxygen (or oxidizing agent) reacts with the hydrogen ions transferred through the electrolyte membrane and electrons to form water and cause electrons to move to the external circuit.

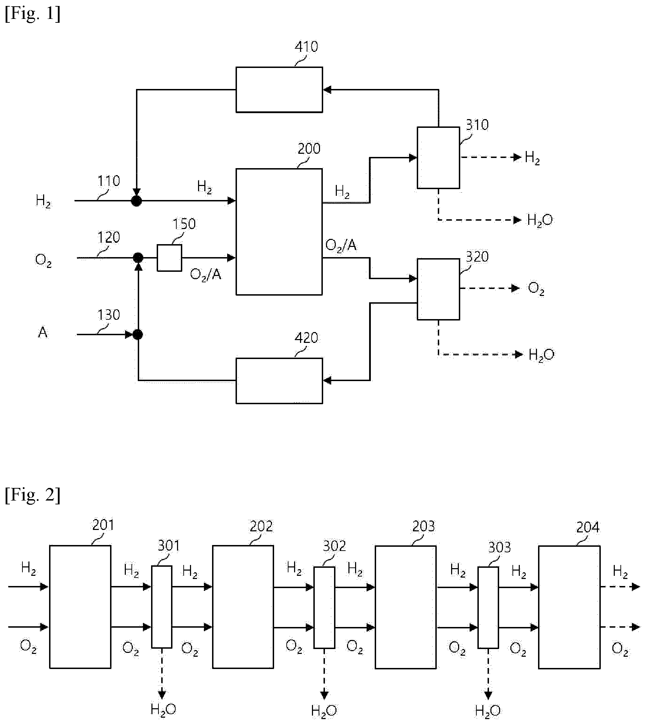

Fig. 2 schematically shows the configuration of a conventional fuel cell system used underwater such as in a submarine. The conventional underwater fuel cell system generally has a cascade type in which several fuel cell stacks (201, 202, 203, and 204) are connected in series. The cascade-type stack structure has the advantage of high utilization of fuel and oxidizer underwater, whereas the structure of the fuel cell stack module is complicated due to the application of a gas-liquid separator (301, 302, and 303) between the cascade-type stacks, and additional control of the gas-liquid separator is required. In addition, the conventional cascade-type fuel cell stack is expensive due to the use of a high-content platinum catalyst and a thick electrolyte membrane.

### [Prior Art Document]

### [Patent Document]

(Patent Document 1) Japanese Patent No. 10-1755379

### Disclosure of Invention

### Technical Problem

Fuel cells used underwater, such as in submarines, have a complicated structure because a cascade-type fuel cell stack is generally adopted to react hydrogen and oxygen at a utilization rate close to 100%. In addition, in order to increase the efficiency in a cascade-type fuel cell stack, a catalyst with a high content of expensive platinum black (Pt-black) and a thick electrolyte membrane must be adopted, thereby increasing the manufacturing costs.

In order to solve this problem, hydrogen and oxygen, which are unreacted and discharged from the fuel cell stack, are recirculated to the fuel cell stack, so that the fuel cell stack can be simply configured in one stage to increase the utilization rate of hydrogen and oxygen underwater. However, since pure oxygen is generally used in an underwater environment in which air is blocked, corrosion of the fuel cell stack increases as the number and elapsed time of recirculation increase, thereby shortening the lifespan.

As a result of research conducted by the present inventors, therefore, it has been discovered that when an inert gas such as nitrogen is mixed with oxygen supplied to the fuel cell stack, corrosion is suppressed despite recirculation, so that it is possible to adopt a one-stage stack, an inexpensive catalyst, and a thin electrolyte membrane in an underwater environment.

Accordingly, an object of the present invention is to provide a fuel cell system having excellent durability and low manufacturing costs with an increased efficiency through recirculation of a fuel in a simple structure in an underwater environment.

### Solution to Problem

According to the above object, the present invention provides a fuel cell system for use in an article operated underwater, which comprises a fuel cell unit provided with an anode, a cathode, and an electrolyte membrane; a first supply line for supplying a fuel comprising hydrogen to the anode; a second supply line for supplying an oxidizing agent comprising oxygen to the cathode; a gas mixing unit for supplying an inert gas to the second supply line to mix the inert gas to the oxidizing agent; a first separator and a second separator for carrying out gas-liquid separation of the fluid discharged from the anode and the cathode, respectively; and a first pump and a second pump for recirculating the gas separated in the first separator and the second separator to the first supply line and the second supply line, respectively.

### Advantageous Effects of Invention

The fuel cell system according to the present invention can achieve a fuel utilization rate of 99.9% or more by recirculation of a fuel even when a fuel cell composed of a single-stage stack is adopted and can simplify the complicated gas-liquid separation control attributed to a cascade-type stack.

In addition, since the fuel cell system does not use pure oxygen even in an underwater environment, resulting in less corrosion, it is possible to use a catalyst having a low platinum support rate or a thin electrolyte membrane, thereby reducing its manufacturing costs.

In addition, the structure of the fuel cell system of the present invention increases the fluid flow rate, thereby facilitating the discharge of water from the inside of the fuel cell stack.

### Brief Description of Drawings

Fig. 1 schematically shows the configuration of a fuel cell system according to an embodiment of the present invention.
Fig. 2 schematically shows the configuration of a conventional underwater fuel cell system.

**<Explanation of Reference Numerals>**

| | | | |
|---|---|---|---|
| 110: | first supply line | 120: | second supply line |
| 130: | gas mixing unit | 150: | sensor |
| 200: | fuel cell unit | | |
| 201: | first fuel cell stack | 202: | second fuel cell stack |
| 203: | third fuel cell stack | 204: | fourth fuel cell stack |
| 301, 302, 303: | gas-liquid separator | | |
| 310: | first separator | 320: | second separator |
| 410: | first pump | 420: | second pump |
| A: | inert gases such as N₂ | | |

### Best Mode for Carrying out the Invention

Hereinafter, the constitution and function according to an embodiment of the present invention will be described in detail with reference to the accompanying drawings. The following description is one of the several aspects of the invention that can be claimed, and the following description may form part of the detailed techniques of the invention.

In describing the present invention, however, detailed descriptions of known constitution and function may be omitted to clarify the present invention.

Since the present invention may be modified in various ways and may include various embodiments, specific embodiments will be illustrated in the drawings and described in the detailed description. However, this is not intended to limit the present invention to a specific embodiment. Rather, it is to be understood to cover all changes, equivalents, or substitutes encompassed in the ideal and scope of the present invention.

Terms including ordinal numbers, such as first and second, may be used to describe various elements, but the corresponding elements are not limited by these terms. These terms are only used for the purpose of distinguishing one element from another.

When an element is referred to as being "connected" to another element, it is to be understood that although it may be directly connected to the other component, another component may be interposed between them.

In addition, when an element is referred to as "supplying" a specific substance to another element, it is to be understood that a supply line capable of supplying the substance to the other component is provided and the substance is supplied through the supply line.

The terms used in the present application are used only to describe specific embodiments and are not intended to limit the present invention. Singular expressions include plural expressions unless the context clearly indicates otherwise.

### Fuel cell system

Fig. 1 schematically shows the configuration of a fuel cell system according to an embodiment of the present invention. In Fig. 1, a square indicates each component, a solid arrow indicates a flow of raw material, and a dotted arrow indicates a flow of discharged material.

Referring to Fig. 1, the fuel cell system for use in an article operated underwater according to the present invention comprises a fuel cell unit (200) provided with an anode, a cathode, and an electrolyte membrane; a first supply line (110) for supplying a fuel comprising hydrogen to the anode; a second supply line (120) for supplying an oxidizing agent comprising oxygen to the cathode; a gas mixing unit (130) for supplying an inert gas (A) to the second supply line (120) to mix the inert gas (A) to the oxidizing agent; a first separator (310) and a second separator (320) for carrying out gas-liquid separation of the fluid discharged from the anode and the cathode, respectively; and a first pump (410) and a second pump (420) for recirculating the gas separated in the first separator (310) and the second separator (320) to the first supply line (110) and the second supply line (120), respectively.

In addition, the second supply line (120) may further comprise a sensor (150) for detecting the ratio of the inert gas (A) such as nitrogen mixed into the oxidizing agent.

Hereinafter, each component of the fuel cell system will be described in detail.

### Fuel cell unit

The fuel cell unit may be composed of a single-stage fuel cell stack.

As described above, according to the present invention, the fuel cell structure can be configured in a single stage instead of a cascade type thanks to a recirculation structure, thereby simplifying the fuel cell stack structure, along with an increased effect of cost reduction.

The fuel cell unit has two electrodes, that is, an anode and a cathode. The electrode may be a gas diffusion electrode.

The anode may oxidize hydrogen to generate hydrogen ions. The anode may be composed of a catalyst layer and a gas diffusion layer. A catalyst such as platinum, ruthenium, osmium, platinum-ruthenium alloy, platinum-osmium alloy, platinum-palladium alloy, and platinum-transition metal alloy may be used in the catalyst layer of the anode.

The cathode serves to reduce an oxidizing agent such as oxygen.

The cathode may be composed of a catalyst layer and a gas diffusion layer.

A catalyst such as platinum or a platinum-transition metal alloy may be used in the catalyst layer of the cathode.

The gas diffusion layer adopted in the anode and the cathode, respectively, serves as a current conductor and transfers and diffuses reaction materials, such as a fuel and an oxidizing agent, and water.

The gas diffusion layer may be made of, for example, carbon paper, carbon cloth, or carbon felt. A microporous layer may be formed on the side of the gas diffusion layer in contact with the catalyst layer.

The electrolyte membrane serves to transfer hydrogen ions generated at the anode of the fuel cell unit to the cathode and to electrically separate the anode and the cathode from each other.

The electrolyte membrane may be used without particular limitation as long as it is a polymer film used as an electrolyte membrane in a fuel cell or the like. For example, the electrolyte membrane may be a flexible polymer film.

Specifically, the electrolyte membrane may comprise a polymer resin selected from the group consisting of a perfluorosulfonic acid-based polymer resin, a polyimide resin, a polyvinylidene fluoride resin, a polyethersulfone resin, a polyphenylene sulfide resin, a polyphenylene oxide resin, a polyphosphazine resin, a polyethylene naphthalate resin, a polyester resin, a doped polybenzimidazole resin, a polyether ketone resin, a polysulfone resin, an ion conductive polymer resin thereof, and a mixed resin thereof.

According to the present invention, since an inert gas such as nitrogen is mixed with oxygen as an oxidizing agent, corrosion of the fuel cell stack is suppressed, and an inexpensive catalyst and an electrolyte membrane can be used. In the present specification, the inert gas refers to a gas such as nitrogen, argon, neon, and helium that hardly react with other components. Meanwhile, carbon dioxide having a low activity may also be used in the present invention in addition to the inert gas.

For example, when a platinum-based catalyst is used for the anode or cathode, excellent performance may be achieved even with an inexpensive catalyst having a low platinum support rate.

Specifically, the anode or the cathode may comprise a catalyst in which platinum is supported in an amount of 0.1 mg/cm² to 2.0 mg/cm². More specifically, the amount of platinum supported on the catalyst may be 0.1 mg/cm² to 1.0 mg/cm² or 0.1 mg/cm² to 0.5 mg/cm².

In addition, the fuel cell of the present invention can achieve excellent performance even when an inexpensive thin electrolyte membrane is used. For example, the electrolyte membrane may have a thickness of 10 µm to 200 µm. Specifically, the electrolyte membrane may have a thickness of 10 µm to 100 µm. As a more specific example, the electrolyte membrane may have a thickness of 10 µm to 50 µm or 10 µm to 20 µm.

### First supply line, second supply line, and gas mixing unit

The first supply line supplies a fuel comprising hydrogen to the anode, and the second supply line supplies an oxidizing agent comprising oxygen to the cathode. In addition, the gas mixing unit supplies an inert gas such as nitrogen to the second supply line to mix the inert gas into the oxidizing agent.

The fuel cell system may further comprise a hydrogen supply unit for supplying hydrogen and an oxygen supply unit for supplying oxygen. The hydrogen supply unit and the oxygen supply unit may be connected to the first supply line and the second supply line, respectively.

In the fuel cell system of the present invention, the basic raw material gases are hydrogen, oxygen, and inert gas, while hydrogen and nitrogen may be generated from ammonia by a separator and then supplied to the anode and the cathode, respectively.

Specifically, the hydrogen supply unit may comprise a hydrogen storage tank or an ammonia storage tank.

For example, the ammonia storage tank may decompose ammonia stored therein to supply hydrogen to the first supply line. In addition, ammonia may be further decomposed in the ammonia storage tank to supply nitrogen to the second supply line through the gas mixing unit.

Specifically, the fuel cell system further comprises an ammonia storage tank for storing ammonia. The ammonia storage tank may decompose ammonia into hydrogen and nitrogen to supply them to the first supply line and the gas mixing unit, respectively.

In addition, the ammonia storage tank may be connected to the hydrogen supply unit and the gas mixing unit to supply hydrogen and nitrogen to them, respectively.

In addition, the fuel cell system may further comprise a first controller for regulating the pressure between the hydrogen supply unit and the first supply line to control the supplied amount of hydrogen, a second controller for regulating the pressure between the oxygen supply unit and the second supply line to control the supplied amount of oxygen, and a third controller for regulating the pressure between the gas mixing unit and the second supply line to control the supplied amount of an inert gas such as nitrogen.

The gas recirculated by the first pump and the second pump is further mixed into the first supply line and the second supply line.

As a result, the first supply line may supply a mixture of hydrogen supplied from the hydrogen supply unit and unreacted hydrogen recirculated by the first pump to the anode.

In addition, the second supply line may supply a mixture of oxygen and inert gas supplied from the hydrogen supply unit and the gas mixing unit and unreacted oxygen and inert gas recirculated by the second pump to the cathode.

The gas mixing unit may mix 20% by weight to 80% by weight of an inert gas based on the total weight of the oxidizing agent (total weight of gases supplied to the cathode). Within the above range of mixing amount, corrosion of the fuel cell stack due to continuous use of pure oxygen can be suppressed, so that an inexpensive membrane-electrode assembly having a catalyst having a low platinum support rate or a thin electrolyte membrane can be used. For example, the mixing amount of the inert gas may be 50% by weight to 80% by weight, 50% by weight to 70% by weight, or 60% by weight to 80% by weight.

The second supply line may further comprise a sensor for detecting the ratio of an inert gas such as nitrogen mixed into an oxidizing agent. The sensor may detect the ratio of an inert gas such as nitrogen mixed into an oxidizing agent and regulate the amount mixed into the second supply line when it differs from a preset value.

### First separator and second separator

The first separator and the second separator carry out gas-liquid separation of the fluid discharged from the anode and the cathode, respectively.

Once a fuel and an oxidizing agent have reacted in the fuel cell unit, a fluid in which a gas and a liquid are mixed is discharged from the anode and the cathode. For example, a fluid comprising an unreacted fuel and water produced by the reaction is discharged from the anode, and a fluid comprising an unreacted oxidizing agent and water produced by the reaction is discharged from the cathode.

Specifically, the fluid discharged from the anode may comprise unreacted hydrogen and water, and the fluid discharged from the cathode may comprise unreacted oxygen, an inert gas, and water.

Thus, the unreacted hydrogen and water are separated in the first separator, most of the unreacted hydrogen is recirculated to the fuel cell unit, and water is discharged to the outside.

In addition, the unreacted oxygen, inert gas, and water are separated in the second separator, most of the unreacted oxygen and inert gas is recirculated to the fuel cell unit, and water is discharged to the outside.

Meanwhile, most of the unreacted fuel and oxidizing agent separated in the first separator and the second separator are recirculated to the fuel cell while some of them may be discharged to the outside. The amounts of the unreacted fuel and oxidizing agent that are not recirculated and are discharged to the outside are very small relative to the amount of the fuel and oxidizing agent initially supplied to the fuel cell unit; thus, a high utilization rate may be achieved.

Specifically, the gas separated in the first separator may comprise the unreacted hydrogen, and the remainder of the unreacted hydrogen that is not recirculated to the first supply line may be discharged to the outside. The amount of hydrogen discharged to the outside may be 0.5% by weight or less relative to the hydrogen supplied to the anode.

In addition, the gas separated in the second separator may comprise the unreacted oxygen, and the remainder of the unreacted oxygen that is not recirculated to the second supply line may be discharged to the outside. The amount of oxygen discharged to the outside may be 0.5% by weight or less relative to the oxygen supplied to the cathode.

In addition, the first separator and the second separator may separate water from the fluid discharged from the anode and the cathode, and the separated water may be discharged to the outside.

### First pump and second pump

The first pump and the second pump recirculate the gas separated in the first separator and the second separator to the first supply line and the second supply line, respectively.

The gas recirculated to the first supply line and the second supply line by the first pump and the second pump may comprise a fuel and an oxidizing agent, respectively.

For example, the gas recirculated to the first supply line may comprise unreacted hydrogen, and the gas recirculated to the second supply line may comprise unreacted oxygen and an inert gas such as nitrogen.

Specifically, the gas recirculated to the first supply line may comprise unreacted hydrogen in an amount of 20% by weight to 50% by weight, and the gas recirculated to the second supply line may comprise unreacted oxygen and inert gas in an amount of 20% by weight to 70% by weight in total. More specifically, the gas recirculated to the first supply line may comprise unreacted hydrogen in an amount of 20% by weight to 40% by weight or 30% by weight to 50% by weight, and the gas recirculated to the second supply line may comprise unreacted oxygen and inert gas in an amount of 20% by weight to 50% by weight or 40% by weight to 70% by weight in total.

### Effects and uses

The fuel cell system according to the present invention can achieve a fuel utilization rate of 99.9% or more by recirculation of a fuel even when a fuel cell composed of a single-stage stack is adopted and can minimize the complicated gas-liquid separation control attributed to a cascade-type stack.

In addition, since the fuel cell system does not use pure oxygen even in an underwater environment, resulting in less corrosion, it is possible to use a catalyst having a low platinum support rate or a thin electrolyte membrane, thereby reducing its manufacturing costs.

In addition, the structure of the fuel cell system of the present invention increases the fluid flow rate, thereby facilitating the discharge of water from the inside of the fuel cell stack. Specifically, the fuel cell system of the present invention is designed as a recirculation system, so that a large amount of hydrogen flows to the anode as compared with the case where hydrogen is quantitatively supplied; thus, the fluid velocity can be increased. In addition, an inert gas in an amount of up to 4 times oxygen actually used flows to the cathode, so that it is possible to increase the fluid velocity as compared with the case where oxygen is quantitatively supplied.

Thus, the fuel cell system of the present invention can be used for an article operated underwater such as submarines.

The embodiments of the present invention have been described with reference to the accompanying drawings. However, those of ordinary skill in the art to which the present invention pertains can understand that the present invention can be implemented in other specific forms without changing the technical idea or essential features thereof. For example, those skilled in the art may change the material, size, and the like of each element according to the field of application, or combine or substitute the embodiments to implement in a form that is not clearly disclosed in the descriptions of the present invention, which does not fall outside the scope of the present invention. Therefore, the embodiments described above are illustrative in all respects and should not be understood as limiting the subject invention. These modified embodiments fall under the technical idea described in the claims of the present invention.

## Claims

1. A fuel cell system for use in an article operated underwater, which comprises a fuel cell unit provided with an anode, a cathode, and an electrolyte membrane;
a first supply line for supplying a fuel comprising hydrogen to the anode;
a second supply line for supplying an oxidizing agent comprising oxygen to the cathode;
a gas mixing unit for supplying an inert gas to the second supply line to mix the inert gas to the oxidizing agent;
a first separator and a second separator for carrying out gas-liquid separation of the fluid discharged from the anode and the cathode, respectively; and
a first pump and a second pump for recirculating the gas separated in the first separator and the second separator to the first supply line and the second supply line, respectively.

2. The fuel cell system of claim 1, wherein the gas mixing unit mixes 20% by weight to 80% by weight of the inert gas based on the total weight of the oxidizing agent.

3. The fuel cell system of claim 1, wherein the second supply line further comprises a sensor for detecting the ratio of the inert gas mixed into the oxidizing agent.

4. The fuel cell system of claim 1, wherein the fuel cell unit is composed of a single-stage fuel cell stack.

5. The fuel cell system of claim 1, wherein the anode or the cathode comprises a catalyst in which platinum is supported in an amount of 0.1 mg/cm² to 2.0 mg/cm².

6. The fuel cell system of claim 1, wherein the electrolyte membrane has a thickness of 10 µm to 100 µm.

7. The fuel cell system of claim 1, wherein the fluid discharged from the anode comprises unreacted hydrogen and water, and the fluid discharged from the cathode comprises unreacted oxygen, an inert gas, and water.

8. The fuel cell system of claim 1, wherein the first separator and the second separator separate water from the fluid discharged from the anode and the cathode, and the separated water is discharged to the outside.

9. The fuel cell system of claim 1, wherein the article operated underwater is a submarine.
